# FASCICULE DE BREVET EUROPEEN

(11) **EP 4 363 299 B1**
(45) Date de publication et mention de la délivrance du brevet: **06.08.2025**
(21) Numéro de dépôt: 22730621.4
(22) Date de dépôt: 10.06.2022
(51) Int. Cl.: B62K 25/08

(54) **SYSTEME DE BLOCAGE DE SUSPENSION POUR VEHICULE**
AUFHÄNGUNGSSPERRSYSTEM FÜR EIN FAHRZEUG
SUSPENSION LOCKOUT SYSTEM FOR A VEHICLE

(30) Priorité: 28.06.2021 FR 2106949
(43) Date de publication de la demande: 08.05.2024
(73) Titulaire: L'Idée Moteur, 85110 Chantonnay (FR)
(72) Inventeur: DELAVAL, Samuel, 85110 Chantonnay (FR)
(74) Mandataire: Cabinet Chaillot
(86) Numéro de dépôt international: PCT/IB2022/055397
(87) Numéro de publication internationale: WO 2023/275644

(56) Documents cités:
- US-A- 3 758 092
- US-A1- 2013 187 315
- US-A1- 2017 350 468

## Description

La présente invention concerne le domaine des systèmes de blocage de suspension et porte plus particulièrement sur un système de blocage de suspension pour véhicule destiné à être utilisé sur un véhicule comportant une suspension par fourche télescopique et au moins un protège-fourche, au démarrage.

Dans le domaine des courses, en particulier des courses motocyclistes, il est courant de recourir à des dispositifs de blocage de suspension en vue de réaliser un démarrage « holeshot ». De tels dispositifs comportent un premier ensemble fixé à la suspension et un second ensemble fixé à un protège-fourche. Pour bloquer la suspension, le pilote exerce une pression vers le bas sur la suspension de façon à amener le premier ensemble dans une position plus basse que le second ensemble. Le second ensemble est alors actionné de façon à positionner en saillie un élément de blocage qui vient en prise avec le premier ensemble lors de la remontée de la suspension. On connaît de tels dispositifs des demandes US20170350468 A1, US20160144926 A1 et US20120292148 A1. Dans ces dispositifs, le second ensemble est actionné par un opérateur autre que le pilote. Ils requièrent donc deux opérateurs. En outre, leur fonctionnement nécessite une parfaite synchronisation entre les deux opérateurs du fait que le second ensemble doit être actionné avant la remontée de la suspension, le mouvement de descente/remontée de la suspension étant particulièrement bref. Ces dispositifs ne sont donc pas aisés à manipuler et il est fréquent de devoir renouveler l'opération. On connaît de la demande WO2020146321 A1 un dispositif de démarrage actionnable par le pilote préalablement à la poussée sur la suspension. Toutefois, un tel dispositif est particulièrement complexe, comporte des pièces difficilement usinables et présente une fiabilité limitée. Le document US 2017/350468 A1 décrit un système de blocage de suspension selon le préambule de la revendication 1.

Par ailleurs, tous les dispositifs de l'état antérieur de la technique présentent l'inconvénient de ne pas être réglables et ne sont ainsi adaptés qu'à une unique distance suspension-protection prédéfinie, de sorte qu'ils ne fonctionnent pas de façon optimale, voire pas du tout, pour différents types de montage suspension/protection.

Il existe donc un besoin pour un dispositif de blocage de suspension polyvalent et qui soit pratique à mettre en œuvre et fiable tout en étant de conception simple.

Le Demandeur se propose donc de répondre à ces besoins par l'emploi d'un système de blocage de suspension pour véhicule comportant une suspension télescopique et un protège-fourche correspondant intégrant différents types de moyens de rappel dont le rapport des constantes de raideur va conditionner le verrouillage préalable du second ensemble.

La présente invention a donc pour objet un système de blocage de suspension destiné à être utilisé sur un véhicule comportant une suspension par fourche télescopique et au moins un protège-fourche, ladite fourche ayant deux paires de tubes télescopiques comprenant chacune un tube inférieur relié à un axe de roue et un tube supérieur, le ou chaque protège-fourche étant monté en regard d'une paire respective de tubes télescopiques, le système comprenant :
- un premier ensemble destiné à être fixé à un tube supérieur de la fourche télescopique et comprenant un crochet de capture, et
- un second ensemble destiné à être fixé audit protège-fourche respectif et comprenant un doigt de blocage et un support fixe, par lequel le second ensemble est, en utilisation, fixé au protège-fourche, le doigt de blocage étant monté déplaçable en translation entre une position, dite de blocage, dans laquelle le doigt de blocage fait saillie du support fixe et, en utilisation, passe à travers un trou prévu à cet effet dans ledit protège-fourche, et est capturé par le crochet de capture pour ainsi bloquer la suspension, et une position, dite rentrée, dans laquelle le doigt de blocage fait moins saillie que dans la position de blocage, de façon à ne pas interférer avec le premier ensemble et la suspension,

les premier et second ensembles étant par ailleurs configurés de telle sorte qu'en utilisation, après une première descente du tube supérieur, le premier ensemble est à une hauteur inférieure à celle du second ensemble, puis la remontée du tube supérieur est arrêtée par la capture du doigt de blocage dans le crochet de capture, et suite à une seconde descente du tube supérieur, le doigt de blocage est ramené à la position rentrée pour ne plus s'opposer aux déplacements du tube supérieur par rapport au tube inférieur,
le système étant caractérisé par le fait que le second ensemble comprend en outre :
   - un premier moyen de rappel configuré pour être sollicité en compression par le déplacement du doigt de blocage de la position rentrée vers la position de blocage,
   - un organe de maintien qui est déplaçable en translation par rapport au doigt de blocage entre une position, dite de maintien, dans laquelle il maintient le doigt de blocage dans une position intermédiaire, dite d'attente, dans laquelle le doigt de blocage fait davantage saillie du support fixe que dans la position rentrée, mais moins que dans la position de blocage, et une position, dite de libération, dans laquelle il ne s'oppose pas au retour du doigt de blocage à la position rentrée sous l'action du premier moyen de rappel, étant prévu un second moyen de rappel élastique de l'organe de maintien vers la position de libération, l'organe de maintien étant agencé de telle sorte qu'en position de maintien le doigt de blocage appuie contre l'organe de maintien sous l'action du premier moyen de rappel, les premier et second moyens de rappel élastique étant dimensionnés de telle sorte que, lorsque l'organe de maintien est en position de maintien, la force de rappel du premier moyen de rappel est supérieure à celle du second moyen de rappel, ce par quoi l'organe de maintien est maintenu dans la position de maintien par le premier moyen de rappel, et
par le fait que le crochet de capture présente une rampe, dite de libération, contre laquelle, en utilisation, le doigt de blocage vient en contact à la remontée du tube supérieur suite à sa première descente, la rampe de libération étant orientée de façon à amener le doigt de blocage à se déplacer en translation de la position d'attente à la position de blocage, relâchant l'appui exercé par le doigt de blocage sur l'organe de maintien et autorisant ainsi ce dernier à retourner dans la position de libération.

Ainsi, un tel dispositif présente l'avantage d'être automatique du fait que l'organe de maintien revient en position de libération sous le seul effet du second moyen de rappel.

Avantageusement,
- le premier ensemble comprend une bague destinée à être montée autour dudit tube supérieur, le crochet de capture étant porté par la bague et destiné, en utilisation, à être ouvert vers le haut et en regard d'un premier côté du protège-fourche respectif,
- le second ensemble est fixé sur un second côté de ce dernier, opposé audit premier côté, le support fixe comprenant une base destinée à être appliquée contre le second côté dudit protège-fourche et un logement s'étendant à partir de la base, la base comportant un trou traversant débouchant dans le logement,
- le doigt de blocage est monté déplaçable en translation dans le logement, le long d'un axe longitudinal de ce dernier, et comprend une partie tige qui s'étend à travers le trou traversant de la base et une partie tête dont la section transversale est plus grande que celle de la partie tige et par laquelle le doigt de blocage est guidé en translation dans le logement,
- le premier moyen de rappel élastique prend appui sur la partie tête du doigt de blocage et sur la base,
- la direction d'action du second moyen de rappel est dans un plan perpendiculaire à la direction d'action du premier moyen de rappel,
- l'organe de maintien est monté sur le support fixe, et comprend des première et seconde parties qui sont parallèles l'une à l'autre et perpendiculaires à la direction d'action du premier moyen de rappel, l'organe de maintien étant agencé de telle sorte qu'en position de maintien la partie tête du doigt de blocage appuie contre ladite première partie sous l'action du premier moyen de rappel, l'appui exercé par le doigt de blocage étant transmis par la seconde partie à une partie dite d'opposition, solidaire du support fixe, et
- l'un ou l'autre du crochet de capture et de l'extrémité libre de la partie tige du doigt de blocage présente une rampe, dite de passage, orientée de telle sorte qu'en utilisation, avec le doigt de blocage maintenu dans la position d'attente, lors de la première descente du tube supérieur le second ensemble et le protège-fourche sont déplacés d'un seul tenant à l'écart du tube supérieur par le premier ensemble lorsque ce dernier descend à une hauteur inférieure à celle du second ensemble.

Selon un premier mode de réalisation particulier, l'organe de maintien consiste en un barillet monté pour être déplaçable en rotation autour de et en translation le long de l'axe longitudinal du logement, le barillet ayant une première extrémité qui est en regard de la partie tête du doigt de blocage et qui constitue ladite première partie de l'organe de maintien, le barillet présentant une rainure réalisée sur la face externe du barillet et ayant deux extrémités fermées, la rainure comprenant un premier tronçon qui s'étend de façon hélicoïdale et définit une première extrémité fermée de la rainure, côté plus proche de la base, et un second tronçon qui s'étend de façon circonférentielle à partir de la fin du premier tronçon, et la partie d'opposition, solidaire du support fixe, est un pion dont une extrémité est reçue coulissante dans la rainure, ladite seconde partie de l'organe de maintien étant formée par la paroi du second tronçon contre laquelle le pion vient en contact.

Avantageusement, la rainure comporte en outre un troisième tronçon s'étendant de façon longitudinale à partir de la fin du deuxième tronçon, en direction de la première extrémité du barillet.

De préférence, le second moyen de rappel est formé par un ressort de torsion disposé côté première extrémité du barillet et dont les spires sont enroulées autour de l'axe longitudinal du logement, le ressort de torsion ayant une première extrémité reçue dans un trou ménagé dans le barillet et par laquelle le ressort de torsion est relié de façon fixe au barillet et une seconde extrémité reçue dans une rainure ménagée longitudinalement dans la face interne du logement et par laquelle seconde extrémité le ressort de torsion est relié de façon coulissante au logement.

De préférence, le système de blocage de suspension comprend une vis de réglage, reliée au barillet et destinée à venir en contact avec la partie tête du doigt de blocage, la vis de réglage étant configurée pour être actionnable de façon à ajuster le positionnement du doigt de blocage par rapport au logement dans la position d'attente.

Avantageusement, une molette est fixée à la seconde extrémité du barillet, hors du logement.

Selon un second mode de réalisation particulier, la partie tête du doigt de blocage présente un trou sur sa surface périphérique, le support fixe présente un tube de guidage s'étendant radialement à partir du logement et débouchant dans ce dernier, le tube de guidage étant positionné de façon à déboucher sur ledit trou de la partie tête lorsque le doigt de blocage est en position d'attente, et l'organe de maintien est formé par une broche qui est montée à translation dans le tube de guidage, une première extrémité de la broche étant destinée à venir se placer dans ledit trou de la partie tête lorsque l'organe de maintien est dans la position de maintien et une seconde extrémité de la broche étant située hors du tube de guidage pour être apte à être actionnée par un utilisateur, ladite broche formant lesdites première et seconde parties de l'organe de maintien tandis que la paroi intérieure du tube de guidage forme ladite partie d'opposition solidaire du support fixe.

Avantageusement, ledit trou de la partie tête est formé par un trou traversant, un trou borgne ou une gorge périphérique.

Avantageusement, un bouton est fixé à la partie tête du doigt de blocage et est accessible depuis l'extérieur du logement, bouton par lequel un utilisateur est en mesure de pousser le doigt de blocage de la position rentrée à la position d'attente.

De préférence, le second moyen de rappel est formé par un ressort de compression monté autour de la partie tige du doigt de blocage.

Pour mieux illustrer l'objet de la présente invention, on va en décrire ci-après, à titre indicatif et non limitatif, plusieurs modes de réalisation avec référence aux dessins annexés.

Sur ces dessins :
[Fig.1] est une vue en perspective du système de blocage de suspension selon un premier mode de réalisation de la présente invention monté sur un véhicule comportant une suspension télescopique et un protège-fourche correspondant ;
[Fig.2] est une vue de côté du premier ensemble du système de blocage selon la [Fig.1] ;
[Fig.3] est une vue de côté du premier ensemble du système de blocage selon une variante de réalisation ;
[Fig.4A] est une vue de dessus de la partie fixe du second ensemble du système de blocage de la [Fig.1] ;
[Fig.4B] est une vue en coupe longitudinale de la partie fixe de la [Fig.4A] ;
[Fig.4C] est une vue de face de la partie fixe de la [Fig.4A] ;
[Fig.5A] est une vue de côté du barillet du second ensemble de la [Fig.1] ;
[Fig.5B] est une vue de côté du barillet de la [Fig.5A] tourné selon un angle de 90° autour de son axe longitudinal ;
[Fig.5C] est une vue arrière du barillet de la [Fig.5A] ;
[Fig.6] est une vue de côté du barillet de la [Fig.1] selon une variante de réalisation ;
[Fig.7A] est une vue en coupe longitudinale du second ensemble de la [Fig.1] à une première étape de fonctionnement ;
[Fig.7B] est une vue en coupe longitudinale du second ensemble de la [Fig.1] à une deuxième étape de fonctionnement ;
[Fig.7C] est une vue en coupe longitudinale du second ensemble de la [Fig.1] à une troisième étape de fonctionnement ;
[Fig.7D] est une vue en coupe longitudinale du second ensemble de la [Fig.1] à une quatrième étape de fonctionnement ;
[Fig.8] est une vue en coupe longitudinale du second ensemble selon un second mode de réalisation à une première étape de fonctionnement ;
[Fig.9] est une vue en coupe longitudinale du second ensemble selon le second mode de réalisation à une seconde étape de fonctionnement ;
[Fig.10] est une vue en coupe longitudinale du second ensemble selon une première variante du second mode de réalisation ; et
[Fig.11] est une vue en coupe longitudinale du second ensemble selon une seconde variante du second mode de réalisation.

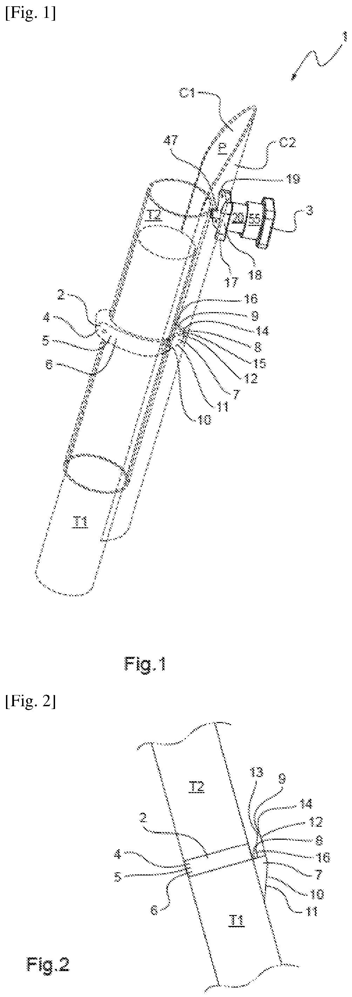

Si l'on se réfère à la [Fig.1], on peut voir qu'il y est représenté un système 1 de blocage de suspension pour véhicule. Le système 1 est destiné à être utilisé sur un véhicule comportant une suspension par fourche télescopique et au moins un protège-fourche P, ladite fourche ayant deux paires de tubes télescopiques T1, T2 comprenant chacune un tube inférieur T1 relié à un axe de roue (non représenté) et un tube supérieur T2, le ou chaque protège-fourche P étant monté en regard d'une paire respective de tubes télescopiques T1, T2. Le système 1 comporte un premier ensemble 2 et un second ensemble 3. Comme on peut le voir sur la [Fig.1], le premier ensemble 2 est fixé au tube supérieur T2. Le second ensemble 3 est fixé au protège-fourche P respectif. En particulier, la suspension est celle d'une motocyclette et le protège-fourche P est disposé en regard de la suspension.

Sur les Figures 1 et 2, on peut voir que le premier ensemble 2 comporte de façon connue une bague 4 montée autour du tube supérieur T2. La bague 4 est constituée par un collier de serrage 5 comprenant deux bras 6 reliés à un crochet de capture 7. Il convient de noter que tout moyen apte à fixer le premier ensemble 2 à la suspension pourra convenir, en particulier tout type de collier de serrage.

Le crochet de capture 7 est configuré pour venir en prise avec le second ensemble 3 de façon à bloquer la suspension. Par blocage de la suspension, on comprend l'action consistant à bloquer la suspension à un certain niveau de débattement, par exemple en une position prédéterminée des tubes T1, T2 l'un par rapport à l'autre, dans l'une des directions de déplacement du tube supérieur T2 par rapport au tube inférieur T1.

A l'état monté du premier ensemble 2 sur le tube supérieur T2, le crochet de capture 7 est ouvert vers le haut et est en regard d'un premier côté C1 du protège-fourche P. Le crochet de capture 7 comporte une zone de réception 8 qui présente une face ouverte 9. Le crochet de capture 7 comporte également une première rampe 10, dite de passage, et dont le rôle sera expliqué ci-après. Selon le mode de réalisation représenté sur la [Fig.2], la rampe de passage 10 présente une partie inférieure 11, présentant un angle par rapport au tube supérieur T2 et une partie supérieure 12, parallèle au tube supérieur T2. Par inférieur et supérieure, on entend le positionnement en bas et en haut, respectivement, à l'état monté du premier ensemble 2 sur le tube supérieur T2. Il convient de noter que la rampe de passage du crochet de capture peut ne comporter qu'une unique section présentant un angle par rapport au tube supérieur.

En outre, le crochet de capture 7 comporte une seconde rampe 13, dite de libération. La rampe de libération 13 s'étend depuis le bord supérieur 14 de la partie supérieure 12 en direction de la zone de réception 8. De façon avantageuse, la partie inférieure 11 de la rampe de passage 10 et la rampe de libération 13 sont parallèles.

Sur la [Fig.2], on peut voir que la rampe de passage 10 et la rampe de libération 13 sont rectilignes.

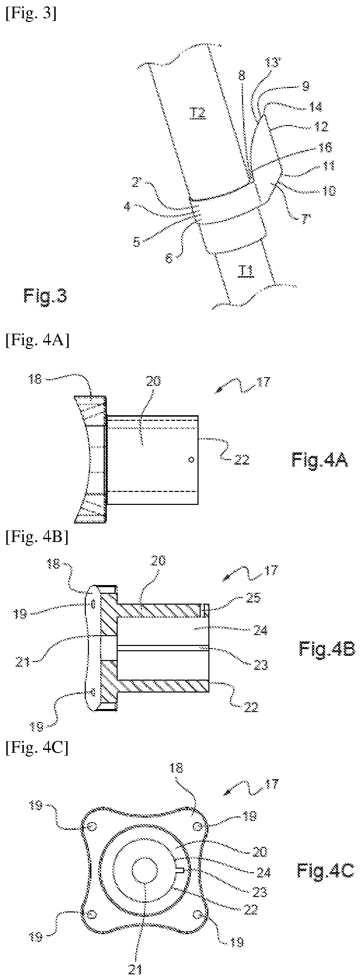

Selon une variante représentée sur la [Fig.3], la rampe de libération 13' du crochet de capture 7' du second ensemble 2' est concave.

Comme on peut le voir sur la [Fig.1], le crochet de capture 7 comporte une fente 15 traversant la partie inférieure 11 et la partie supérieure 12.

De préférence, la zone de réception 8 présente une encoche 16, côté tube supérieur T2 et dont le rôle sera expliqué ci-après.

Le second ensemble 3 comporte un support fixe 17, par lequel le second ensemble 3 est, en utilisation, fixé au protège-fourche P, sur un second côté C2 de ce dernier, opposé audit premier côté C1. Le support fixe 17 comprend une base 18 appliquée contre le second côté C2 du protège-fourche P. De façon avantageuse, comme on peut le voir sur les Figures 1 et 4A-4B, la base 18 présente une courbure de façon à se conformer à la courbure du protège-fourche P. Comme représenté sur les Figures 1 et 4B-4C, la base 18 comporte des alésages 19. Les alésages 19 sont configurés pour la fixation de la base 18 au protège-fourche P, par exemple au moyen de vis. L'homme du métier saura envisager un nombre d'alésages adaptés.

Le support fixe 17 comporte également un logement 20 s'étendant à partir de la base 18 et de forme cylindrique creuse. La base 18 comporte un trou traversant 21 débouchant dans le logement 20, de sorte qu'au niveau de la base 18, l'intérieur du logement 20 communique avec l'extérieur. Le logement 20 est ouvert au niveau du côté 22 opposé à la base 18.

Comme on peut mieux le voir sur la [Fig.4B], une rainure 23 est ménagée sur la face interne 24 du logement 20. Cette rainure 23 s'étend longitudinalement, de préférence sur toute la longueur du logement 20.

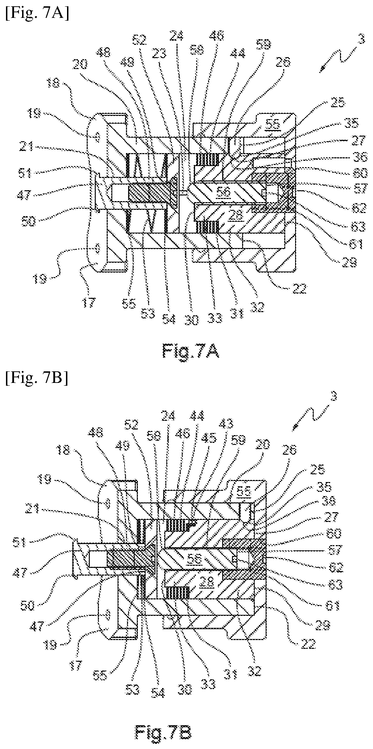

Le logement 20 comporte un trou traversant 25 à proximité du côté ouvert 22. Le trou traversant 25 est disposé perpendiculairement à l'axe de la rainure 23 et est configuré pour recevoir un pion 26 comme représenté sur les Figures 7A-7D. Le pion 26 est dimensionné pour, une fois introduit dans le trou traversant 25, présenter une extrémité libre 27 faisant saillie à l'intérieur du logement 20.

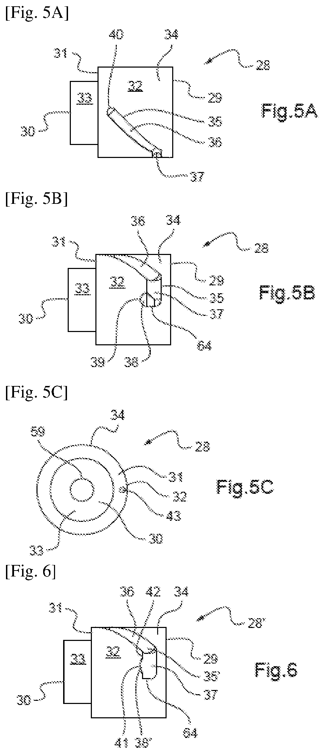

Le second ensemble 3 comporte également un barillet 28. Selon le premier mode de réalisation, le barillet 28 et le logement 20 sont dimensionnés de sorte que le barillet 28 puisse être reçu de façon à coulisser en translation et en rotation à l'intérieur du logement 20. Comme on peut le voir sur les Figures 5A-5C, le barillet 28 est réalisé sous forme cylindrique, présentant une première extrémité 29 et une seconde extrémité 30. A l'état du barillet 28 reçu dans le logement 20, par l'intermédiaire du côté ouvert 22, la seconde extrémité 30 est tournée vers la base 18. De préférence, comme représenté sur les Figures 5A-5B, le barillet 28 comporte un épaulement 31 de sorte qu'il présente, côté première extrémité 29, un premier cylindre 32 de diamètre externe correspondant au diamètre interne du logement 20 et, côté seconde extrémité 30, un second cylindre 33, de diamètre inférieur à celui du premier cylindre 32.

Sur la face externe 34 du premier cylindre 32 du barillet 28 court une rainure 35 configurée pour recevoir l'extrémité libre 27 du pion 26, comme on peut le voir sur les Figures 7A-7D. La rainure 35 présente, depuis la seconde extrémité 30 vers la première extrémité 29, un premier tronçon 36 s'étendant de façon hélicoïdale et un deuxième tronçon 37 s'étendant selon un diamètre du premier cylindre 32 du barillet 28. Selon le mode de réalisation représenté sur la [Fig.5B], on peut voir que la rainure 35 présente en outre un troisième tronçon 38 s'étendant à la suite du deuxième tronçon 37 de façon longitudinale en direction de la seconde extrémité 30 du barillet 28. Ainsi, le barillet 28 comporte une première butée de fin de course 39 au niveau du troisième tronçon 38 et une seconde butée de fin de course 40 au niveau du premier tronçon 36, soit à chaque extrémité de la rainure 35.

En variante, comme représenté sur la [Fig.6], le troisième tronçon 38' de la rainure 35' est constitué par un renfoncement 41 ménagé sur la face 42 du deuxième tronçon 37, côté seconde extrémité 30 du barillet 28'.

Le barillet 28 comporte un trou 43. Selon le mode de réalisation représenté sur la [Fig.5C], le trou 43 est réalisé au niveau de l'épaulement 31, sur le premier cylindre 32. Le rôle du trou 43 sera expliqué ci-après.

Il convient de noter que le barillet pourra n'être constitué que d'un unique cylindre. Dans ce cas, le trou est ménagé dans la face de la seconde extrémité.

Comme on peut le voir sur les Figures 7A-7D, le second ensemble 3 comporte un ressort de torsion 44. Le ressort de torsion 44 comporte une première extrémité fixe 45 configurée pour être reçue dans le trou 43 du barillet 28 et une seconde extrémité libre (non représentée) configurée pour être reçue dans la rainure 23 du logement 20. Ainsi, le ressort de torsion 44 est relié à la fois de façon fixe au barillet 28 par l'intermédiaire de la première extrémité fixe 45 et de façon coulissante au logement 20 par l'intermédiaire de la seconde extrémité libre. A l'état assemblé du second ensemble 3, on peut voir sur les Figures 7A-7D que le ressort de torsion 44 est enroulé autour du second cylindre 33 et les spires 46 du ressort de torsion 44 sont agencées perpendiculairement à l'axe longitudinal du barillet 28. Dans le cas d'un barillet à cylindre unique, le ressort de torsion est disposé contre la face du barillet tournée vers la base.

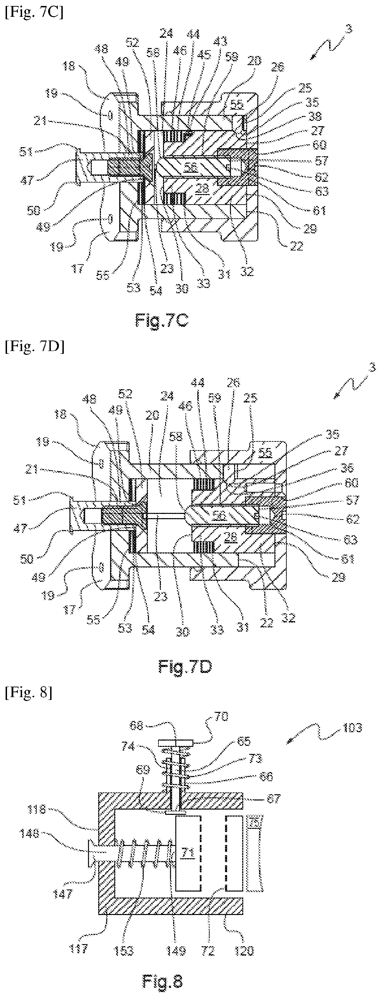

Comme on peut le voir sur les Figures 7A-7D, le second ensemble 3 comporte un doigt de blocage 47. Le doigt de blocage 47 est monté déplaçable en translation dans le logement 20, le long d'un axe longitudinal de ce dernier, entre une position, dite de blocage, dans laquelle le doigt de blocage 47 fait saillie du support fixe 17 comme représenté sur la [Fig.7D], et, en utilisation, passe à travers le trou traversant 21 de la base 18 et un trou prévu à cet effet dans le protège-fourche P, et est capturé par le crochet de capture 7 pour ainsi bloquer la suspension, et une position, dite rentrée, dans laquelle le doigt de blocage 47 fait moins saillie que dans la position de blocage, de façon à ne pas interférer avec le premier ensemble 2 et la suspension, comme représenté sur la [Fig.7A].

Le doigt de blocage 47 comporte une partie tige 48 ayant une première extrémité 49 et une seconde extrémité 50. De préférence, la partie tige 48 est cylindrique. Le doigt de blocage 47 comporte également une extension 51 perpendiculaire à la partie tige 48, disposée au niveau de la seconde extrémité 50. La partie tige 48 du doigt de blocage 47 et le trou traversant 21 du support fixe 17 présentent des formes complémentaires de sorte que, à l'état assemblé du second ensemble 3, le doigt de blocage 47 est reçu coulissant dans le trou traversant 21, avec la seconde extrémité 50 hors du support fixe 17. En outre, l'extension 51 est dimensionnée de telle sorte qu'elle maintient la seconde extrémité 50 hors du support fixe 17. Par exemple, comme représenté sur les Figures 7A-7D, le contour extérieur de l'extension 51 est circulaire et présente un diamètre supérieur au diamètre du trou traversant 21 de la base 18, formant ainsi un épaulement.

A l'état assemblé du second ensemble 3, le doigt de blocage 47 est parallèle à l'axe longitudinal du barillet 28 et perpendiculaire à la base 18.

En outre, la partie tige 48 du doigt de blocage 47 et la fente 13 du premier ensemble 2 présentent des formes complémentaires de sorte que la partie tige 48 peut être reçue dans la fente 13. De même, l'extension 51 du doigt de blocage 47 et l'encoche 16 du premier ensemble 2 présentent des formes complémentaires de sorte que l'extension 51 peut être reçue dans l'encoche 16.

Sur les Figures 7A-7D, on peut voir que le second ensemble 3 comporte un bouchon de ressort 52. Le bouchon de ressort 52 est relié à la première extrémité 49 de la partie tige 48 du doigt de blocage 47, perpendiculairement à la partie tige 48. Le bouchon de ressort 52 présente un diamètre externe sensiblement inférieur au diamètre interne du barillet 28. En outre, le bouchon de ressort 52 présente un diamètre supérieur au diamètre du trou traversant 21 de la base 18 de façon à maintenir la première extrémité 49 de la partie tige 48 à l'intérieur du logement 20.

Le second ensemble 3 comporte également un ressort de compression 53. Le ressort de compression 53 est disposé dans le logement 20, autour de la partie tige 48 du doigt de blocage 47 entre le bouchon de ressort 52 et la base 18, avec une première extrémité 54 configurée pour exercer une pression sur le bouchon de ressort 52 et une seconde extrémité 55 configurée pour exercer une pression sur la base 18.

Sur les Figures 1 et 7A-7D, on peut voir que le second ensemble 3 comporte une molette 55. La molette 55 est reliée à la première extrémité 29 du barillet 28. La molette 55 est configurée pour être actionnée par un utilisateur pour entraîner le barillet 28 en rotation autour de son axe longitudinal. De préférence, la molette 55 présente une forme ergonomique.

Sur les Figures 7A-7D, on peut voir qu'il y est représenté une vis de réglage 56. La vis de réglage 56 comporte une première extrémité 57 et une seconde extrémité 58. Comme on peut le voir sur les Figures 5C et 7A-7D, le barillet 28 comporte un trou traversant 59 dans lequel la vis de réglage 56 est reçue apte à se déplacer de façon réglable, la seconde extrémité 58 faisant saillie dans le logement 20. La vis de réglage 56 est destinée à venir en contact par sa seconde extrémité 58 avec le bouchon de ressort 52, la vis de réglage 56 étant configurée pour être actionnable de façon à ajuster le positionnement du doigt de blocage 47 par rapport au logement 20. Ainsi, le trou traversant 59 du barillet 28 et la vis de réglage 56 sont munis de filetages (non représentés) correspondants. La première extrémité 57 est configurée de sorte à pouvoir actionner la vis de réglage 56, et comporte à cet effet un renfoncement pour tournevis. De façon avantageuse, la molette 55 comporte un trou 60 en correspondance, configuré pour recevoir un contre-écrou 61 également reçu au niveau de la première extrémité 29 du barillet 28 et qui se visse sur la première extrémité 57 de la vis de réglage 56 afin de bloquer en position cette dernière, une fois le réglage effectué.

Selon le premier mode de réalisation, le barillet 28 constitue un organe de maintien qui est monté sur le support fixe 17 et est déplaçable en translation par rapport au doigt de blocage 47 entre une position, dite de maintien, dans laquelle il maintient le doigt de blocage 47 dans une position intermédiaire, dite d'attente, dans laquelle le doigt de blocage 47 fait davantage saillie du support fixe 17 que dans la position rentrée, mais moins que dans la position de blocage, et une position, dite de libération, dans laquelle il ne s'oppose pas au retour du doigt de blocage 47 à la position rentrée, sous l'action du ressort de compression 53. Le barillet 28 est représenté dans la position de libération sur les Figures 7A et 7D et est représenté dans la position de maintien sur la [Fig.7B]. Le doigt de blocage 47 est représenté dans la position rentrée sur la [Fig.7A], dans la position d'attente sur la [Fig.7B] et dans la position de blocage sur la Figures 7D.

Selon le premier mode de réalisation, le bouchon de ressort 52 constitue une partie tête du doigt de blocage 47 dont la section transversale est plus grande que celle de la partie tige 48 et par laquelle le doigt de blocage 47 est guidé en translation dans le logement 20.

En variante, le bouchon de ressort et le doigt de blocage sont réalisés d'un seul tenant.

Le ressort de compression 53 constitue un premier moyen de rappel élastique et le ressort de torsion 44 constitue un second moyen de rappel élastique.

Selon le premier mode de réalisation, la seconde extrémité 58 de la vis de réglage 56 constitue une première partie de l'organe de maintien. En l'absence de vis de réglage, la seconde extrémité 30 du barillet 28 qui est en regard de la partie tête du doigt de blocage 47 constitue la première partie de l'organe de maintien.

La paroi de la rainure contre laquelle le pion 26 vient en contact à la position de maintien constitue une seconde partie de l'organe de maintien. Ainsi, sur la [Fig.5B], la butée de fin de course 39 du troisième tronçon 38 constitue la seconde partie de l'organe de maintien. En l'absence de troisième tronçon, la paroi du second tronçon, côté seconde extrémité du barillet, constitue la seconde partie de l'organe de maintien.

Le pion 26 constitue une partie d'opposition, solidaire du support fixe 17.

Ainsi, la direction d'action du second moyen de rappel est dans un plan perpendiculaire à la direction d'action du premier moyen de rappel, l'organe de maintien comprend des première et seconde parties qui sont parallèles l'une à l'autre et perpendiculaires à la direction d'action du premier moyen de rappel, l'organe de maintien étant agencé de telle sorte qu'en position de maintien la partie tête du doigt de blocage 47 appuie contre ladite première partie sous l'action du premier moyen de rappel, l'appui exercé par le doigt de blocage 47 étant transmis par la seconde partie à la partie d'opposition, solidaire du support fixe 17.

En outre, les premier et second moyens de rappel élastique sont dimensionnés de telle sorte que, lorsque l'organe de maintien est en position de maintien, la force de rappel du premier moyen de rappel est supérieure à celle du second moyen de rappel, ce par quoi l'organe de maintien est maintenu dans la position de maintien par le premier moyen de rappel.

Nous allons décrire ci-après le fonctionnement en utilisation du système de blocage 1 selon le premier mode de réalisation tel que représenté sur les Figures 7A-7D. A l'état initial tel que représenté sur la [Fig.7A], l'organe de maintien, soit le barillet 28, est dans la position de libération, le doigt de blocage 47 est dans la position rentrée, le second moyen de rappel élastique, soit le ressort de torsion 44, et le premier moyen de rappel élastique, soit le ressort de compression 53, sont à l'état non sollicités. Le pion 26, soit la partie d'opposition, est en fin de course au niveau de la seconde butée de fin de course 40 du premier tronçon 36 de la rainure 35. L'utilisateur tourne la molette 55, ce qui a pour effet d'entraîner en rotation le barillet 28. Du fait de l'extrémité libre 27 du pion 26 coulissant dans la rainure 35 et du fait de l'agencement hélicoïdal du premier tronçon 36 de la rainure 35, le barillet 28 subit par rapport au logement 20 à la fois un mouvement de rotation et de translation en direction de la base 18. Le ressort de torsion 44 subit une torsion du fait que sa première extrémité 45 est entraînée en rotation par le barillet 28. Le ressort de torsion 44 subit également un mouvement de translation du fait de sa seconde extrémité reçue coulissante dans la rainure 23 du logement 20.

La seconde extrémité 58 de la vis de réglage 56 vient en contact avec le bouchon de ressort 52 puis pousse celui-ci en direction de la base 18, ce qui a pour effet d'entraîner en translation le doigt de blocage 47 et donc faire sortir davantage la seconde extrémité 50 de la partie tige 48, le ressort de compression 53 étant comprimé. Une fois que l'extrémité libre 27 du pion 26 se déplace dans le second tronçon 37 de la rainure 35, le barillet 28 subit uniquement un mouvement de rotation par rapport au logement 20, ce qui a pour effet de solliciter davantage le ressort de torsion 44. L'extrémité libre 27 du pion 26 arrive ainsi jusqu'en butée contre la paroi de fin 64 du deuxième tronçon 37, soit en amont du troisième tronçon 38 de la rainure 35. L'utilisateur peut ainsi relâcher la molette 55, induisant la libération du ressort de compression 53 qui exerce alors une pression sur le bouchon de ressort 52, transmise à la vis de réglage 56 et donc au barillet 28. Ceci a pour effet de faire translater le barillet 28 à l'opposé de la base 18, l'extrémité libre 27 du pion 26 étant ainsi amenée dans le troisième tronçon 38, jusqu'à la première butée de fin de course 39. A cet état, représenté sur la [Fig.7B], l'organe de maintien est à la position de maintien et le doigt de blocage 47 est à la position d'attente.

L'utilisateur peut alors exercer une pression vers le bas sur la fourche du véhicule, le tube supérieur T2 coulissant autour du tube inférieur T1 immobile. Le premier ensemble 2, initialement positionné à une hauteur supérieure à celle du second ensemble 3 est amené à passer devant le second ensemble 3. Le doigt de blocage 47, par l'intermédiaire de sa seconde extrémité 50 glisse sur la rampe de passage 10 du crochet de capture 7. Ceci a pour effet de repousser le protège-fourche P à l'opposé de la suspension. Une fois le premier ensemble 2 amené à une hauteur inférieure à celle du second ensemble 3, comme représenté sur la [Fig.1], l'utilisateur peut alors relâcher la pression exercée sur la fourche, ce qui a pour effet de faire remonter le tube supérieur T2, soit faire remonter le premier ensemble 2 en direction du second ensemble 3. La seconde extrémité 50 du doigt de blocage 47 est alors amenée à glisser sur la rampe de libération 13 du crochet de capture 7. Ceci a pour effet de tirer le doigt de blocage 47 davantage en dehors du logement 20 et donc de comprimer davantage le ressort de compression 53. Selon la variante représentée sur la [Fig.3], le fait que la rampe de libération 13' soit concave a pour effet de tirer davantage encore sur le doigt de blocage. Il convient de noter que l'homme du métier saura envisager des formes autres que rectilignes et concaves pour autant que la rampe de libération assure la fonction de tirer le doigt de blocage hors du logement de façon à comprimer le ressort de compression.

Ainsi, le doigt de blocage 47 s'écarte du barillet 28 comme représenté sur la [Fig.7C] . L'absence de contact entre le bouchon de ressort 52 et la seconde extrémité 58 de la vis de réglage 56 (ou la seconde extrémité 30 selon le mode de réalisation sans vis de réglage) supprime la force exercée par le ressort de compression 53, soit le premier moyen de rappel élastique, sur le barillet 28, soit sur la première partie de l'organe de maintien. Le barillet 28 ainsi libéré est sollicité par le ressort de torsion 44 qui lui fait subir une rotation, puis une rotation et une translation, par rapport au logement 20, du fait du déplacement de l'extrémité libre 27 du pion 26 dans la rainure 35, pour revenir à la position de libération. Une fois la seconde extrémité 50 du doigt de blocage 47 reçue dans la zone de réception 8 et l'extension 51 reçue dans l'encoche 16, le doigt de blocage 47 est dans la position de blocage, comme représenté sur la [Fig.7D]. Le premier ensemble 2 et le second ensemble 3 sont ainsi solidarisés et la suspension est bloquée.

La présente invention est particulièrement avantageuse par rapport aux dispositifs existants du fait que le crochet de capture 7 est dimensionné de telle sorte que lorsque le doigt de blocage 47 est tiré, le crochet de capture 7 vient contre le protège-fourche P de façon à l'empêcher de bouger et donc de se rapprocher du tube supérieure T2. Ainsi, la combinaison crochet de capture 7 et rampe de libération 13 permet de tirer au maximum le doigt de blocage 47 hors du logement 20, le protège-fourche P étant maintenu à distance fixe du tube supérieur T2, de façon à comprimer au maximum le ressort de compression 53 et ainsi permettre de libérer le ressort de torsion 44, soit le second moyen de rappel élastique.

Une nouvelle pression vers le bas exercée sur la fourche, par exemple suite au premier freinage, conduit à écarter la seconde extrémité 50 de la zone de réception 8, soit écarter le doigt de blocage 47 du crochet de capture 7, le ressort de compression 53 pouvant ainsi exercer une force de rappel sur le bouchon de ressort 52, ce qui a pour effet de rappeler le doigt de blocage 47 en position rentrée, comme représenté sur la [Fig.7D].

Sur les Figures 8-11, on peut voir qu'il y est représenté un second ensemble 103 du système de blocage selon un second mode de réalisation. Le système de blocage est similaire au système de blocage 1 selon le premier mode de réalisation décrit ci-dessus. Les éléments du système de blocage identiques ou analogues aux éléments du système de blocage du premier mode de réalisation, et décrits en référence aux Figures 8-11, porteront le même chiffre de référence augmenté de 100, et ne seront pas décrits plus en détail ici.

Selon le second mode de réalisation, l'organe de maintien est formé par une broche 65 qui est montée à translation dans un tube de guidage 66. Le tube de guidage 66 s'étend radialement à partir du logement 120 et débouche dans ce dernier. La broche 65 comporte à chaque extrémité 67, 68 une extension 69, 70 perpendiculaire à la direction longitudinale de la broche 65 et configurée de sorte à maintenir la broche 65 dans le tube de guidage 66.

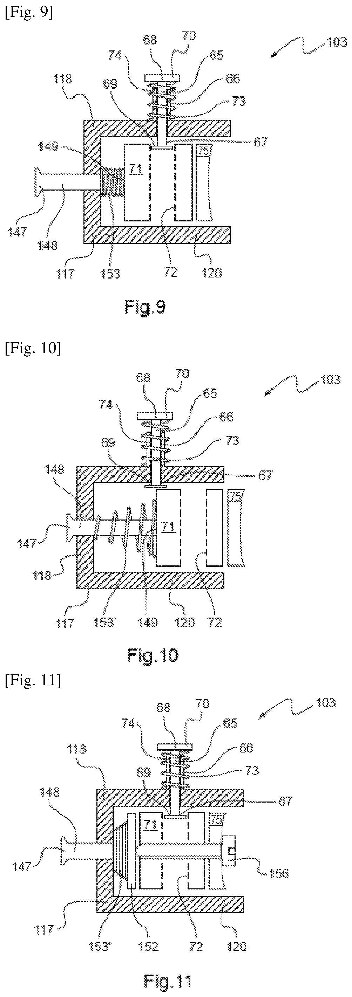

Le doigt de blocage 147 comporte également un cylindre 71 reçu à l'intérieur du logement 120 et relié à la partie tige 148 du doigt de blocage 147, au niveau de la première extrémité 149. Le cylindre 71 constitue la partie tête du doigt de blocage 147 et présente un diamètre sensiblement inférieur au diamètre interne du logement 120 de façon à pouvoir coulisser à l'intérieur du logement 120. La partie tête du doigt de blocage 147 comporte un trou 72 sur la surface périphérique du cylindre 71. Le tube de guidage 66 est positionné de façon à déboucher sur le trou 72 lorsque le doigt de blocage 147 est en position d'attente, une extrémité 67 de la broche 65 étant destinée à venir se placer dans ledit trou 72 lorsque la broche 65 est dans la position de maintien et la seconde extrémité 68 de la broche 65 étant située hors du tube de guidage 66 pour être apte à être actionnée par un utilisateur, comme on peut le voir sur la [Fig.9].

On peut voir sur les Figures 8-11 que le second moyen de rappel élastique est constitué par un ressort de compression 73 disposé autour du tube de guidage entre l'extension 70 et le logement 120, et configuré pour prendre appui contre l'extension 70 et le logement 120. Il convient de noter que le ressort de compression peut être disposé à l'intérieur du tube de guidage, autour de la broche, entre l'extension et le logement.

Le ressort de compression 153 constitue le premier moyen de rappel élastique et est configuré pour prendre appui contre la base 118 et le cylindre 71.

Sur les Figures 8-9, on peut voir que le ressort de compression 153 est de forme cylindrique. Selon une variante représentée sur les Figures 10-11, le ressort de compression 153' est en forme de cône tronquée de façon à réduire davantage l'espace entre la base 118 et le doigt de blocage 147 en position de blocage.

Selon le second mode de réalisation, la broche 65 forme lesdites première et seconde parties de l'organe de maintien tandis que la paroi intérieure 74 du tube de guidage 66 forme la partie d'opposition solidaire du support fixe 117.

Comme représenté sur les Figures 8-10, le trou 72 est formé de préférence par un trou traversant. Il convient de noter que le trou de la partie tête peut également être un trou borgne ou une gorge périphérique.

De façon avantageuse, et comme représenté sur les Figures 8-11, un bouton 75 est fixé au cylindre 71 du doigt de blocage 147 et est accessible depuis l'extérieur du logement 120, bouton 75 par lequel un utilisateur est en mesure de pousser le doigt de blocage 147 de la position rentrée à la position d'attente.

La [Fig.11] représente une variante du second mode de réalisation dans laquelle le second ensemble 103 comporte une vis de réglage 156 traversant le cylindre 71. La vis de réglage 156 est configurée pour fonctionner de la même façon que selon le premier mode de réalisation. Pour ce faire, le second ensemble 103 comporte un bouchon de ressort 152 interposé entre la partie tige 148 et le cylindre 71. Le bouchon de ressort 152 et le cylindre 71 ne sont pas solidaires de sorte que la vis de réglage 156 sert à régler l'écart entre ceux-ci.

Nous allons décrire ci-après le fonctionnement en utilisation du système de blocage selon le second mode de réalisation tel que représenté sur les Figures 8-9. A l'état initial tel que représenté sur la [Fig.8], l'organe de maintien, soit la broche 65 est dans la position de libération, l'extrémité 67 étant hors du trou 72 du cylindre 71. Le doigt de blocage 147 est dans la position rentrée.

Lorsque l'utilisateur exerce une pression sur le bouton 75, transmise au cylindre 71, le doigt de blocage 147 est poussé davantage hors du logement 120, comprimant le ressort de compression 153, jusqu'à ce que l'extrémité 67 du la broche 65 soit en regard du trou 72. Là, l'utilisateur agissant sur l'extrémité 68 de la broche 65, amène l'autre extrémité 67 dans le trou 72, comprimant le ressort de compression 73, comme représenté sur la [Fig.9]. Comme selon le premier mode de réalisation, du fait de la configuration des ressorts de compression 153, 73, soit du premier moyen de rappel élastique et du second moyen de rappel élastique, la broche 65, soit l'organe de maintien, est maintenu dans la position de maintien. Sous l'effet du second moyen de rappel, le cylindre 71 exerce une pression sur la partie de la broche 65 reçue dans le trou 72, soit la première partie de l'organe de maintien, pression transmise à la partie de la broche 65, soit la seconde partie de l'organe de maintien, ainsi plaquée contre la paroi intérieure 74 du tube de guidage 66, soit la partie d'opposition. C'est la position d'attente.

Une fois la capture du doigt de blocage 147 par le crochet de capture réalisée, la pression exercée par le premier moyen de ressort élastique sur le cylindre 71 est supprimée de sorte que sous l'effet du ressort de compression 73, la broche 65 est rappelée dans sa position de libération. Le retour du doigt de blocage 147 à sa position rentrée est similaire au premier mode de réalisation.

## Revendications

1. Système de blocage de suspension (1) destiné à être utilisé sur un véhicule comportant une suspension par fourche télescopique et au moins un protège-fourche (P), ladite fourche ayant deux paires de tubes télescopiques (T1, T2) comprenant chacune un tube inférieur (T1) relié à un axe de roue et un tube supérieur (T2), le ou chaque protège-fourche (P) étant monté en regard d'une paire respective de tubes télescopiques (T1, T2), le système (1) comprenant :
- un premier ensemble (2) destiné à être fixé à un tube supérieur (T2) de la fourche télescopique et comprenant un crochet de capture (7), et
- un second ensemble (3 ; 103) destiné à être fixé audit protège-fourche (P) respectif et comprenant un doigt de blocage (47 ; 147) et un support fixe (17 ; 117), par lequel le second ensemble (3 ; 103) est, en utilisation, fixé au protège-fourche (P), le doigt de blocage (47 ; 147) étant monté déplaçable en translation entre une position, dite de blocage, dans laquelle le doigt de blocage (47 ; 147) fait saillie du support fixe (17) et, en utilisation, passe à travers un trou prévu à cet effet dans ledit protège-fourche (P), et est capturé par le crochet de capture (7) pour ainsi bloquer la suspension, et une position, dite rentrée, dans laquelle le doigt de blocage (47 ; 147) fait moins saillie que dans la position de blocage, de façon à ne pas interférer avec le premier ensemble (2) et la suspension,
les premier (2) et second (3 ; 103) ensembles étant par ailleurs configurés de telle sorte qu'en utilisation, après une première descente du tube supérieur (T2), le premier ensemble (2) est à une hauteur inférieure à celle du second ensemble (3 ; 103), puis la remontée du tube supérieur (T2) est arrêtée par la capture du doigt de blocage (47 ; 147) dans le crochet de capture (7), et suite à une seconde descente du tube supérieur (T2), le doigt de blocage (47 ; 147) est ramené à la position rentrée pour ne plus s'opposer aux déplacements du tube supérieur (T2) par rapport au tube inférieur (T1),
le second ensemble (3 ; 103) comprend en outre :
- un premier moyen de rappel élastique (53 ; 153 ; 153') configuré pour être sollicité en compression par le déplacement du doigt de blocage (47 ; 147) de la position rentrée vers la position de blocage,
le système étant **caractérisé par**
- un organe de maintien (28 ; 65) qui est déplaçable en translation par rapport au doigt de blocage (47 ; 147) entre une position, dite de maintien, dans laquelle il maintient le doigt de blocage (47 ; 147) dans une position intermédiaire, dite d'attente, dans laquelle le doigt de blocage (47 ; 147) fait davantage saillie du support fixe (17 ; 117) que dans la position rentrée, mais moins que dans la position de blocage, et une position, dite de libération, dans laquelle il ne s'oppose pas au retour du doigt de blocage (47 ; 147) à la position rentrée sous l'action du premier moyen de rappel (53 ; 153 ; 153'), étant prévu un second moyen de rappel élastique (44 ; 73) de l'organe de maintien (28 ; 65) vers la position de libération, l'organe de maintien (28 ; 65) étant agencé de telle sorte qu'en position de maintien le doigt de blocage (47 ; 147) appuie contre l'organe de maintien (28 ; 65) sous l'action du premier moyen de rappel (53 ; 153 ; 153'), les premier (53 ; 153 ; 153') et second (44 ; 73) moyens de rappel élastique étant dimensionnés de telle sorte que, lorsque l'organe de maintien (28 ; 65) est en position de maintien, la force de rappel du premier moyen de rappel (53 ; 153 ; 153') est supérieure à celle du second moyen de rappel (44 ; 73), ce par quoi l'organe de maintien (28 ; 65) est maintenu dans la position de maintien par le premier moyen de rappel (53 ; 153 ; 153'), et
par le fait que le crochet de capture (7) présente une rampe de libération, (13 ; 13'), contre laquelle, en utilisation, le doigt de blocage (47 : 147) vient en contact à la remontée du tube supérieur (T2) suite à sa première descente, la rampe de libération (13 ; 13') étant orientée de façon à amener le doigt de blocage (47 ; 147) à se déplacer en translation de la position d'attente à la position de blocage, relâchant l'appui exercé par le doigt de blocage (47 ; 147) sur l'organe de maintien (28 ; 65) et autorisant ainsi ce dernier à retourner dans la position de libération.

2. Système de blocage de suspension (1) selon la revendication 1, **caractérisé par le fait que** :
- le premier ensemble (2) comprend une bague (4) destinée à être montée autour dudit tube supérieur (T2), le crochet de capture (7) étant porté par la bague (4) et destiné, en utilisation, à être ouvert vers le haut et en regard d'un premier côté (C1) du protège-fourche (P) respectif,
- le second ensemble (3 ; 103) est fixé sur un second côté (C2) de ce dernier, opposé audit premier côté (C1), le support fixe (17 ; 117) comprenant une base (18 ; 118) destinée à être appliquée contre le second côté (C2) dudit protège-fourche (P) et un logement (20 ; 120) s'étendant à partir de la base (18 ; 118), la base (18 ; 118) comportant un trou traversant (21) débouchant dans le logement (20 ; 120),
- le doigt de blocage (47 ; 147) est monté déplaçable en translation dans le logement (20 ; 120), le long d'un axe longitudinal de ce dernier, et comprend une partie tige (48 ; 148) qui s'étend à travers le trou traversant (21) de la base (18 ; 118) et une partie tête (52 ; 71) dont la section transversale est plus grande que celle de la partie tige (48 ; 148) et par laquelle le doigt de blocage (47 ; 147) est guidé en translation dans le logement (20 ; 120),
- le premier moyen de rappel élastique (53 ; 153 ; 153') prend appui sur la partie tête (52 ; 71) du doigt de blocage (47 ; 147) et sur la base (18 ; 118),
- la direction d'action du second moyen de rappel (44 ; 73) est dans un plan perpendiculaire à la direction d'action du premier moyen de rappel (53 ; 153 ; 153'),
- l'organe de maintien (28 ; 65) est monté sur le support fixe (17 ; 117), et comprend des première (58) et seconde (39) parties qui sont parallèles l'une à l'autre et perpendiculaires à la direction d'action du premier moyen de rappel (53 ; 153 ; 153'), l'organe de maintien (28 ; 65) étant agencé de telle sorte qu'en position de maintien la partie tête (52 ; 71) du doigt de blocage (47 ; 147) appuie contre ladite première partie (58) sous l'action du premier moyen de rappel (53 ; 153 ; 153'), l'appui exercé par le doigt de blocage (47 ; 147) étant transmis par la seconde partie (39) à une partie dite d'opposition (26 ; 74), solidaire du support fixe (17 ; 117), et
- l'un ou l'autre du crochet de capture (7) et de l'extrémité libre (50) de la partie tige (48 ; 148) du doigt de blocage (47 ; 147) présente une rampe (10), dite de passage, orientée de telle sorte qu'en utilisation, avec le doigt de blocage (48 ; 148) maintenu dans la position d'attente, lors de la première descente du tube supérieur (T2) le second ensemble (3 ; 103) et le protège-fourche (P) sont déplacés d'un seul tenant à l'écart du tube supérieur (T2) par le premier ensemble (2) lorsque ce dernier descend à une hauteur inférieure à celle du second ensemble (3 ; 103).

3. Système de blocage de suspension (1) selon la revendication 2, **caractérisé par le fait que** l'organe de maintien (28) consiste en un barillet (28) monté pour être déplaçable en rotation autour de et en translation le long de l'axe longitudinal du logement (20), le barillet (28) ayant une première extrémité (30) qui est en regard de la partie tête (52) du doigt de blocage (47) et qui constitue ladite première partie de l'organe de maintien (28), le barillet (28) présentant une rainure (35) réalisée sur la face externe du barillet (28) et ayant deux extrémités fermées (39, 40 ; 41), la rainure (35) comprenant un premier tronçon (36) qui s'étend de façon hélicoïdale et définit une première extrémité fermée (40) de la rainure (35), côté plus proche de la base (18), et un second tronçon (37) qui s'étend de façon circonférentielle à partir de la fin du premier tronçon (36), et la partie d'opposition (26), solidaire du support fixe, est un pion (26) dont une extrémité (27) est reçue coulissante dans la rainure (35), ladite seconde partie de l'organe de maintien (28) étant formée par la paroi du second tronçon contre laquelle le pion (26) vient en contact.

4. Système de blocage de suspension (1) selon la revendication 3, **caractérisé par le fait que** la rainure (35) comporte en outre un troisième tronçon (38) s'étendant de façon longitudinale à partir de la fin du deuxième tronçon (37), en direction de la première extrémité (30) du barillet (28).

5. Système de blocage de suspension (1) selon l'une quelconque des revendications 3 et 4, **caractérisé par le fait que** le second moyen de rappel (44) est formé par un ressort de torsion (44) disposé côté première extrémité (30) du barillet et dont les spires (46) sont enroulées autour de l'axe longitudinal du logement (20), le ressort de torsion (44) ayant une première extrémité (45) reçue dans un trou (43) ménagé dans le barillet (28) et par laquelle le ressort de torsion (44) est relié de façon fixe au barillet (28) et une seconde extrémité reçue dans une rainure (23) ménagée longitudinalement dans la face interne (24) du logement (20) et par laquelle seconde extrémité le ressort de torsion (44) est relié de façon coulissante au logement (20).

6. Système de blocage de suspension (1) selon l'une quelconque des revendications 3 à 5, **caractérisé par le fait qu'**il comprend une vis de réglage (56), reliée au barillet (28) et destinée à venir en contact avec la partie tête (52) du doigt de blocage (47), la vis de réglage (56) étant configurée pour être actionnable de façon à ajuster le positionnement du doigt de blocage (47) par rapport au logement (20) dans la position d'attente.

7. Système de blocage de suspension (1) selon l'une quelconque des revendications 3 à 6, **caractérisé par le fait qu'**une molette (55) est fixée à la seconde extrémité (29) du barillet (28), hors du logement (20).

8. Système de blocage de suspension selon la revendication 2, **caractérisé par le fait que** la partie tête (71) du doigt de blocage (147) présente un trou (72) sur sa surface périphérique, le support fixe présente un tube de guidage (66) s'étendant radialement à partir du logement (120) et débouchant dans ce dernier, le tube de guidage (66) étant positionné de façon à déboucher sur ledit trou (72) de la partie tête lorsque le doigt de blocage (147) est en position d'attente, et l'organe de maintien (65) est formé par une broche (65) qui est montée à translation dans le tube de guidage (66), une première extrémité (67) de la broche (65) étant destinée à venir se placer dans ledit trou (72) de la partie tête lorsque l'organe de maintien (65) est dans la position de maintien et une seconde extrémité (68) de la broche (65) étant située hors du tube de guidage (66) pour être apte à être actionnée par un utilisateur, ladite broche (65) formant lesdites première et seconde parties de l'organe de maintien (65) tandis que la paroi intérieure (74) du tube de guidage (66) forme ladite partie d'opposition solidaire du support fixe.

9. Système de blocage de suspension selon la revendication 8, **caractérisé par le fait que** ledit trou (72) de la partie tête est formé par un trou traversant, un trou borgne ou une gorge périphérique.

10. Système de blocage de suspension selon l'une quelconque des revendications 8 et 9, **caractérisé par le fait qu'**un bouton (75) est fixé à la partie tête du doigt de blocage (147) et est accessible depuis l'extérieur du logement (120), bouton (75) par lequel un utilisateur est en mesure de pousser le doigt de blocage (147) de la position rentrée à la position d'attente.

11. Système de blocage de suspension selon l'une quelconque des revendications 1 à 10, **caractérisé par le fait que** le second moyen de rappel (73) est formé par un ressort de compression (153, 153') monté autour de la partie tige (148) du doigt de blocage (147).

## Patentansprüche

1. - Aufhängungssperrsystem (1) zur Verwendung an einem Fahrzeug mit einer Aufhängung durch eine Teleskopgabel und mindestens einem Gabelschutz (P), wobei die Gabel zwei Paare von Teleskoprohren (T1, T2) aufweist, die jeweils ein mit einer Radachse verbundenes Unterrohr (T1) und ein Oberrohr (T2) umfassen, wobei der oder jeder Gabelschutz (P) gegenüber einem jeweiligen Paar von Teleskoprohren (T1, T2) angebracht ist, wobei das System (1) Folgendes umfasst:
- eine erste Baugruppe (2), die dazu bestimmt ist, an einem Oberrohr (T2) der Teleskopgabel befestigt zu werden, und die einen Fanghaken (7) umfasst, und
- eine zweite Baugruppe (3; 103) zur Befestigung an dem jeweiligen Gabelschutz (P), die einen Sperrfinger (47; 147) und eine feste Halterung (17; 117) umfasst, durch die die zweite Baugruppe (3; 103) im Gebrauch an dem Gabelschutz (P) befestigt ist, wobei der Sperrfinger (47; 147) translatorisch verschiebbar zwischen einer sogenannten Sperrposition montiert ist, in der der Sperrfinger (47; 147) von der festen Halterung (17) vorsteht und im Gebrauch durch ein dafür vorgesehenes Loch in dem Gabelschutz (P) hindurchgeht und von dem Fanghaken (7) gefangen wird, um dadurch die Aufhängung zu blockieren, und einer sogenannten eingezogenen Position, in der der Sperrfinger (47; 147) weniger vorsteht als in der Sperrposition, so dass er nicht mit der ersten Baugruppe (2) und der Aufhängung interferiert,
wobei die erste (2) und die zweite (3; 103) Baugruppe außerdem so konfiguriert sind, dass im Gebrauch nach einem ersten Absenken des oberen Rohrs (T2) die erste Baugruppe (2) auf einer niedrigeren Höhe als die zweite Baugruppe (3; 103) ist, dann das Anheben des oberen Rohrs (T2) durch das Einfangen des Sperrfingers (47; 147) in dem Fanghaken (7) unterbrochen wird, und infolge eines zweiten Absenkens des oberen Rohrs (T2) der Sperrfinger (47; 147) in die eingezogene Position zurückgeführt wird, um sich nicht mehr den Bewegungen des oberen Rohrs (T2) in Bezug auf das untere Rohr (T1) zu widersetzen,
die zweite Baugruppe (3; 103) umfasst ferner :
- ein erstes elastisches Rückstellmittel (53; 153; 153'), das so konfiguriert ist, dass es durch die Bewegung des Sperrfingers (47; 147) aus der eingefahrenen Position in die Sperrposition auf Kompression beansprucht wird,
wobei das System **gekennzeichnet ist durch**
- ein Halteorgan (28; 65), das in Bezug auf den Sperrfinger (47; 147) translatorisch verschiebbar ist zwischen einer sogenannten Halteposition, in der es den Sperrfinger (47; 147) in einer Zwischenposition, der sogenannten Wartestellung, hält, in der der Sperrfinger (47; 147) weiter aus dem festen Träger (17 ; 117) vorsteht als in der eingefahrenen Position, aber weniger als in der Sperrposition, und einer Position, die Freigabeposition genannt wird, in der er der Rückkehr des Blockierfingers (47; 147) in die eingefahrene Position unter der Wirkung des ersten Rückstellmittels (53; 153; 153') nicht entgegenwirkt, wobei ein zweites elastisches Rückstellmittel (44; 73) des Halteorgans (28 ; 65) zur Freigabestellung hin vorgesehen, wobei das Halteorgan (28; 65) so angeordnet ist, dass der Sperrfinger (47; 147) in der Haltestellung unter der Wirkung des ersten Rückstellmittels (53; 153; 153') gegen das Halteorgan (28; 65) drückt, wobei das erste (53; 153; 153') und das zweite (44 ; 73) elastische Rückstellmittel so dimensioniert sind, dass, wenn sich das Halteorgan (28; 65) in der Halteposition befindet, die Rückstellkraft des ersten Rückstellmittels (53; 153; 153') größer ist als die des zweiten Rückstellmittels (44; 73), wodurch das Halteorgan (28; 65) durch das erste Rückstellmittel (53; 153; 153') in der Halteposition gehalten wird, und
**dadurch, dass** der Fanghaken (7) eine Freigaberampe (13; 13') aufweist, gegen die im Gebrauch der Sperrfinger (47; 147) beim Anheben des Oberrohrs (T2) nach seinem ersten Absenken in Kontakt kommt, wobei die Freigaberampe (13 ; 13') so ausgerichtet ist, dass sie den Sperrfinger (47; 147) dazu veranlasst, sich translatorisch von der Warteposition in die Sperrposition zu verschieben, wodurch der vom Sperrfinger (47; 147) auf das Halteorgan (28; 65) ausgeübte Druck gelöst wird und letzteres somit in die Freigabeposition zurückkehren kann.

2. - Aufhängungssperrsystem (1) nach Anspruch 1, **dadurch gekennzeichnet, dass** :
- die erste Baugruppe (2) einen Ring (4) umfasst, der dazu bestimmt ist, um das obere Rohr (T2) herum montiert zu werden, wobei der Fanghaken (7) von dem Ring (4) getragen wird und dazu bestimmt ist, im Gebrauch nach oben und gegenüber einer ersten Seite (C1) des jeweiligen Gabelschutzes (P) geöffnet zu werden,
- die zweite Baugruppe (3; 103) an einer zweiten Seite (C2) des letzteren gegenüber der ersten Seite (C1) befestigt ist, wobei der feste Träger (17; 117) eine Basis (18; 118), die dazu bestimmt ist, gegen die zweite Seite (C2) des Gabelschutzes (P) angelegt zu werden, und eine Aufnahme (20; 120) umfasst, die sich von der Basis (18; 118) aus erstreckt, wobei die Basis (18; 118) ein Durchgangsloch (21) aufweist, das sich in die Aufnahme (20; 120) öffnet,
- der Sperrfinger (47; 147) in dem Gehäuse (20; 120) entlang einer Längsachse desselben translatorisch verschiebbar angebracht ist und einen Schaftabschnitt (48; 148), der sich durch das Durchgangsloch (21) der Basis (18; 118) erstreckt, und einen Kopfabschnitt (52; 71) umfasst, dessen Querschnitt größer als der des Schaftabschnitts (48; 148) ist und durch den der Sperrfinger (47; 147) in dem Gehäuse (20; 120) translatorisch verschiebbar geführt wird,
- das erste elastische Rückstellmittel (53; 153; 153') stützt sich auf den Kopfteil (52; 71) des Sperrfingers (47; 147) und auf die Basis (18; 118),
- die Wirkungsrichtung des zweiten Rückstellmittels (44; 73) in einer Ebene liegt, die senkrecht zur Wirkungsrichtung des ersten Rückstellmittels (53; 153; 153') verläuft,
- das Halteorgan (28; 65) an dem festen Träger (17; 117) angebracht ist und einen ersten (58) und einen zweiten (39) Teil umfasst, die parallel zueinander und senkrecht zur Wirkungsrichtung des ersten Rückstellmittels (53; 153; 153') verlaufen, wobei das Halteorgan (28; 65) so angeordnet ist, dass in der Halteposition der Kopfteil (52 ; 71) des Sperrfingers (47; 147) unter der Wirkung des ersten Rückstellmittels (53; 153; 153') gegen den ersten Teil (58) drückt, wobei die vom Sperrfinger (47; 147) ausgeübte Druckkraft vom zweiten Teil (39) auf einen sogenannten Gegenteil (26; 74) übertragen wird, der fest mit der festen Halterung (17; 117) verbunden ist, und
- entweder der Fanghaken (7) oder das freie Ende (50) des Schaftabschnitts (48; 148) des Sperrfingers (47; 147) eine Rampe (10), die sogenannte Durchgangsrampe, aufweist, die so ausgerichtet ist, dass im Gebrauch, wenn der Sperrfinger (48; 148) in Wartestellung ist, eine Rampe (10) entsteht, die so ausgerichtet ist, dass im Gebrauch, wenn der Sperrfinger (48 ; 148), der in der Warteposition gehalten wird, beim ersten Absenken des oberen Rohrs (T2) die zweite Baugruppe (3; 103) und der Gabelschutz (P) in einem Stück vom oberen Rohr (T2) weg durch die erste Baugruppe (2) bewegt werden, wenn letztere auf eine niedrigere Höhe als die der zweiten Baugruppe (3; 103) absinkt.

3. - Aufhängungssperrsystem (1) nach Anspruch 2, **dadurch gekennzeichnet, dass** das Halteorgan (28) aus einem Zylinder (28) besteht, der so montiert ist, dass er in Drehung um und in Translation entlang der Längsachse der Aufnahme (20) verschiebbar ist, der Zylinder (28) ein erstes Ende (30) hat, das dem Kopfteil (52) des Sperrfingers (47) gegenüberliegt und das den ersten Teil des Halteorgans (28) bildet, wobei der Zylinder (28) eine Nut (35) aufweist, die auf der Außenseite des Zylinders (28) ausgeführt ist und zwei geschlossene Enden (39, 40 ; 41), wobei die Nut (35) einen ersten Abschnitt (36), der sich schraubenförmig erstreckt und ein erstes geschlossenes Ende (40) der Nut (35) definiert, von der Seite die der Basis (18) am nächsten liegt, und einen zweiten Abschnitt (37) umfasst, der sich in Umfangsrichtung vom Ende des ersten Abschnitts (36) aus erstreckt, und das Gegenteil (26), das fest mit der festen Halterung verbunden ist, ein Stift (26) ist, dessen eines Ende (27) gleitend in der Nut (35) aufgenommen wird, wobei der zweite Teil des Halteorgans (28) durch die Wand des zweiten Abschnitts gebildet wird, gegen die der Stift (26) in Kontakt kommt.

4. - Aufhängungssperrsystem (1) nach Anspruch 3, **dadurch gekennzeichnet, dass** die Nut (35) außerdem einen dritten Abschnitt (38) aufweist, der sich in Längsrichtung vom Ende des zweiten Abschnitts (37) in Richtung des ersten Endes (30) des Zylinders (28) erstreckt.

5. - Aufhängungssperrsystem (1) nach einem der Ansprüche 3 oder 4, **dadurch gekennzeichnet, dass** das zweite Rückstellmittel (44) durch eine Torsionsfeder (44) gebildet wird, die an der Seite des ersten Endes (30) des Zylinders angeordnet ist und deren Windungen (46) um die Längsachse der Aufnahme (20) gewickelt sind, die Torsionsfeder (44) ein erstes Ende (45) hat, das in einem Loch (43) aufgenommen ist, das in dem Zylinder (28) ausgebildet ist und durch das die Torsionsfeder (44) fest mit dem Zylinder (28) verbunden ist, und ein zweites Ende hat, das in einer Nut (23) aufgenommen ist, die in Längsrichtung in der Innenseite (24) der Aufnahme (20) ausgebildet ist und durch das zweite Ende die Torsionsfeder (44) gleitend mit der Aufnahme (20) verbunden ist.

6. - Aufhängungssperrsystem (1) nach einem der Ansprüche 3 bis 5, **dadurch gekennzeichnet, dass** es eine Einstellschraube (56) umfasst, die mit dem Zylinder (28) verbunden und dazu bestimmt ist, mit dem Kopfteil (52) des Sperrfingers (47) in Kontakt zu kommen, wobei die Einstellschraube (56) so konfiguriert ist, dass sie betätigt werden kann, um die Positionierung des Sperrfingers (47) in Bezug auf die Aufnahme (20) in der Wartestellung einzustellen.

7. - Aufhängungssperrsystem (1) nach einem der Ansprüche 3 bis 6, **dadurch gekennzeichnet, dass** ein Rändelrad (55) am zweiten Ende (29) des Zylinders (28) außerhalb der Aufnahme (20) befestigt ist.

8. - Aufhängungsblockiersystem nach Anspruch 2, **dadurch gekennzeichnet, dass** der Kopfteil (71) des Sperrfingers (147) ein Loch (72) auf seiner Umfangsfläche aufweist, die feste Halterung ein Führungsrohr (66) aufweist, das sich radial von der Aufnahme (120) aus erstreckt und in diese mündet, wobei das Führungsrohr (66) so positioniert ist, dass es in das Loch (72) des Kopfteils mündet, wenn sich der Sperrfinger (147) in der Warteposition befindet, und das Halteorgan (65) durch einen Stift (65) gebildet wird, der translatorisch in dem Führungsrohr (66) angebracht ist, ein erstes Ende (67) des Stifts (65) dazu bestimmt ist, in dem Loch (72) des Kopfteils zu sitzen, wenn sich das Halteorgan (65) in der Halteposition befindet, und ein zweites Ende (68) des Stifts (65) außerhalb des Führungsrohrs (66) angeordnet ist, um von einem Benutzer betätigt werden zu können, wobei der Stift (65) den ersten und den zweiten Teil des Halteorgans (65) bildet, während die Innenwand (74) des Führungsrohrs (66) den Gegenteil bildet, der fest mit dem festen Träger verbunden ist.

9. - Aufhängungssperrsystem nach Anspruch 8, **dadurch gekennzeichnet, dass** das Loch (72) des Kopfteils durch ein Durchgangsloch, ein Sackloch oder eine Umfangsnut gebildet wird.

10. - Aufhängungssperrsystem nach einem der Ansprüche 8 oder 9, **dadurch gekennzeichnet, dass** ein Knopf (75) am Kopfteil des Sperrfingers (147) befestigt und von außerhalb der Aufnahme (120) zugänglich ist, wobei ein Benutzer durch den Knopf (75) in der Lage ist, den Sperrfinger (147) aus der eingefahrenen Position in die Warteposition zu drücken.

11. - Aufhängungssperrsystem nach einem der Ansprüche 1 bis 10, **dadurch gekennzeichnet, dass** das zweite Rückstellmittel 73) durch eine Druckfeder (153, 153') gebildet wird, die um den Schaftteil (148) des Sperrfingers (147) herum angebracht ist.

## Claims

1. - A suspension lockout system (1) intended to be used on a vehicle comprising a telescopic fork suspension and at least one fork protector (P), said fork having two pairs of telescopic tubes (T1, T2) each comprising a lower tube (T1) connected to a wheel axle and an upper tube (T2), the or each fork protector (P) being mounted opposite a respective pair of telescopic tubes (T1, T2), the system (1) comprising:
- a first assembly (2) intended to be attached to an upper tube (T2) of the telescopic fork and comprising a catch hook (7), and
- a second assembly (3; 103) intended to be attached to said respective fork protector (P) and comprising a lockout finger (47; 147) and a fixed support (17; 117), whereby the second assembly (3; 103) is, in use, attached to the fork protector (P), the lockout finger (47; 147) being mounted for translational movement between a position, referred to as the lockout position, in which the lockout finger (47; 147) protrudes from the fixed support (17) and, in use, passes through a hole provided for this purpose in said fork protector (P), and is caught by the catch hook (7) to thereby lock the suspension, and a position, referred to as the retracted position, in which the lockout finger (47; 147) protrudes less than in the lockout position, so as not to interfere with the first assembly (2) and the suspension,
wherein the first (2) and second (3; 103) assemblies are further configured so that, in use, after a first descent of the upper tube (T2), the first assembly (2) is at a height lower than that of the second assembly (3; 103), then the ascent of the upper tube (T2) is stopped by the lockout finger (47; 147) being caught in the catch hook (7), and following a second descent of the upper tube (T2), the lockout finger (47; 147) is returned to the retracted position to no longer oppose the movements of the upper tube (T2) relative to the lower tube (T1),
wherein the second assembly (3; 103) further comprises:
- a first elastic return means (53; 153; 153') configured to be urged into compression by the movement of the lockout finger (47; 147) from the retracted position to the lockout position,
the system being **characterized by**
- a holding member (28; 65) which is movable in translation relative to the lockout finger (47; 147) between a position, referred to as the holding position, in which it holds the lockout finger (47; 147) in an intermediate position, referred to as the stand-by position, in which the lockout finger (47; 147) protrudes further from the fixed support (17; 117) than in the retracted position, but less than in the lockout position, and a position, referred to as the release position, in which it does not oppose the return of the lockout finger (47; 147) to the retracted position under the action of the first return means (53; 153; 153'), wherein a second elastic return means (44; 73) for returning the holding member (28; 65) to the release position is provided, the holding member (28; 65) being arranged such that, in the holding position, the lockout finger (47; 147) presses against the holding member (28; 65) under the action of the first return means (53; 153; 153'), the first (53; 153; 153') and second (44 ; 73) elastic return means being dimensioned such that, when the holding member (28; 65) is in the holding position, the return force of the first return means (53; 153; 153') is greater than that of the second return means (44; 73), whereby the holding member (28; 65) is held in the holding position by the first return means (53; 153; 153'), and
in that the catch hook (7) has a release ramp (13; 13') against which, in use, the lockout finger (47; 147) comes into contact when the upper tube (T2) ascents following its first descent, the release ramp (13 ; 13') being directed so as to cause the lockout finger (47; 147) to move in translation from the stand-by position to the lockout position, releasing the pressure exerted by the lockout finger (47; 147) on the holding member (28; 65) and thus allowing the latter to return to the release position.

2. - The suspension lockout system (1) according to claim 1, **characterized in that**:
- the first assembly (2) comprises a ring (4) intended to be mounted around said upper tube (T2), the catch hook (7) being carried by the ring (4) and intended, in use, to open upwards and face a first side (C1) of the respective fork protector (P),
- the second assembly (3; 103) is attached to a second side (C2) of the latter, opposite said first side (C1), the fixed support (17; 117) comprising a base (18; 118) intended to be placed against the second side (C2) of said fork protector (P) and a housing (20; 120) extending from the base (18; 118), the base (18; 118) comprising a through hole (21) opening into the housing (20; 120),
- the lockout finger (47; 147) is mounted for translational movement in the housing (20; 120) along a longitudinal axis thereof, and comprises a shank portion (48; 148) which extends through the through hole (21) of the base (18; 118) and a head portion (52; 71) having a cross-section that is larger than that of the shank portion (48; 148) and by means of which the lockout finger (47; 147) is guided in translation in the housing (20; 120),
- the first elastic return means (53; 153; 153') bears on the head portion (52; 71) of the lockout finger (47; 147) and on the base (18; 118),
- the direction of action of the second return means (44; 73) lies in a plane perpendicular to the direction of action of the first return means (53; 153; 153'),
- the holding member (28; 65) is mounted on the fixed support (17; 117), and comprises first (58) and second (39) parts which are parallel to each other and perpendicular to the direction of action of the first return means (53; 153; 153'), the holding member (28; 65) being arranged such that, in the holding position, the head portion (52 ; 71) of the lockout finger (47; 147) presses against said first part (58) under the action of the first return means (53; 153; 153'), the pressure exerted by the lockout finger (47; 147) being transmitted by the second part (39) to a part, referred to as the opposition part (26; 74), secured to the fixed support (17; 117), and
- one of the catch hook (7) and the free end (50) of the shank portion (48; 148) of the lockout finger (47; 147) has a ramp (10), referred to as the passage ramp, directed such that, in use, with the lockout finger (48 ; 148) held in the stand-by position, during the first descent of the upper tube (T2), the second assembly (3; 103) and the fork protector (P) are moved as a whole away from the upper tube (T2) by the first assembly (2) when the latter descends to a height lower than that of the second assembly (3; 103).

3. - The suspension lockout system (1) according to claim 2, **characterized in that** the holding member (28) consists of a barrel (28) mounted so as to be movable in rotation about and in translation along the longitudinal axis of the housing (20), the barrel (28) having a first end (30) which faces the head portion (52) of the lockout finger (47) and which constitutes said first part of the holding member (28), the barrel (28) having a groove (35) formed on the outer face of the barrel (28) and having two closed ends (39, 40; 41), the groove (35) comprising a first section (36) which extends helically and defines a first closed end (40) of the groove (35), closer to the base (18), and a second section (37) which extends circumferentially from the end of the first section (36), and the opposition part (26), secured to the fixed support, is a pin (26) one end (27) of which is slidably received in the groove (35), said second part of the holding member (28) being formed by the wall of the second section against which the pin (26) comes into contact.

4. - The suspension lockout system (1) according to claim 3, **characterized in that** the groove (35) further comprises a third section (38) extending longitudinally from the end of the second section (37), towards the first end (30) of the barrel (28).

5. - The suspension lockout system (1) according to any one of claims 3 and 4, **characterized in that** the second return means (44) is formed by a torsion spring (44) arranged at the first end (30) of the barrel and whose coils (46) are wound around the longitudinal axis of the housing (20), the torsion spring (44) having a first end (45) received in a hole (43) provided in the barrel (28) and by which the torsion spring (44) is fixedly connected to the barrel (28) and a second end received in a groove (23) provided longitudinally in the inner face (24) of the housing (20) and by which the torsion spring (44) is slidably connected to the housing (20).

6. - The suspension lockout system (1) according to any one of claims 3 to 5, **characterized in that** it comprises an adjusting screw (56), connected to the barrel (28) and intended to come into contact with the head portion (52) of the lockout finger (47), the adjusting screw (56) being configured to be operable so as to adjust the positioning of the lockout finger (47) relative to the housing (20) in the stand-by position.

7. - The suspension lockout system (1) according to any one of claims 3 to 6, **characterized in that** a knob (55) is attached to the second end (29) of the barrel (28), outside the housing (20).

8. - The suspension lockout system according to claim 2, **characterized in that** the head portion (71) of the lockout finger (147) has a hole (72) on its peripheral surface, the fixed support has a guide tube (66) extending radially from the housing (120) and opening into the latter, the guide tube (66) being positioned so as to open onto said hole (72) of the head portion when the lockout finger (147) is in the stand-by position, and the holding member (65) is formed by a shaft (65) which is mounted for translation in the guide tube (66), a first end (67) of the shaft (65) being intended to be placed in said hole (72) of the head portion when the holding member (65) is in the holding position and a second end (68) of the shaft (65) being located outside the guide tube (66) to be able to be operated by a user, said shaft (65) forming said first and second parts of the holding member (65) while the inner wall (74) of the guide tube (66) forms said opposition part secured to the fixed support.

9. - The suspension lockout system according to claim 8, **characterized in that** said hole (72) of the head portion is formed by a through hole, a blind hole or a peripheral groove.

10. - The suspension lockout system according to any one of claims 8 and 9, **characterized in that** a button (75) is attached to the head portion of the lockout finger (147) and is accessible from outside the housing (120), button (75) by means of which a user is able to push the lockout finger (147) from the retracted position to the stand-by position.

11. - The suspension lockout system according to any one of claims 1 to 10, **characterized in that** the second return means (73) is formed by a compression spring (153, 153') mounted around the shank portion (148) of the lockout finger (147).
